# EUROPEAN PATENT APPLICATION

(11) **EP 2 889 752 A1**
(43) Date of publication of application: **01.07.2015**
(21) Application number: 13830895.2
(22) Date of filing: 21.08.2013
(51) Int. Cl.: G06F 3/12, G06F 15/16, H04L 9/32, G06F 21/60

(54) **APPARATUS AND METHOD FOR CONTROLLING PRINTING USING VIRTUAL PRINTER, AND AUTHENTICATION SERVER AND AUTHENTICATION METHOD THEREFOR**

(30) Priority: 21.08.2012 KR 20120091336
(71) Applicant: Fasoo. Com Co., Ltd, Seoul 121-270 (KR)
(72) Inventor: KANG, Pil-Gu, Incheon 405-260 (KR); KIM, Kwang-Hoon, Seoul 157-203 (KR)
(74) Representative: Grünecker Patent- und Rechtsanwälte PartG mbB
(86) International application number: PCT/KR2013/007482
(87) International publication number: WO 2014/030916

(57) **Abstract**

Disclosed are an apparatus and method for controlling printing using a virtual printer, and an authentication server and authentication method therefor. A virtual printing unit of the printing control apparatus converts and encrypts data to be printed, corresponding to a print command, into image-type data upon taking, as an input, the print command for outputting a document, and generates document information which is information on the data to be printed, and/or user information for user authentication. A user authentication unit transmits the document information and/or the user information to the authentication server for user authentication, and receives, from the authentication server, a print request command including printer identification information designated by a user and/or authentication information indicating the result of user authentication. A printing control unit decrypts the encrypted data to be printed when the print request command is received, and transmits the decrypted data to be a designated printer.

## Description

### [Technical Field]

The present invention relates to an apparatus and method for controlling printing using a virtual printer, and an authentication server and authentication method therefor, and more particularly, to an apparatus and method for transmitting printing information to a virtual printer module in a user terminal and transmitting printing information to a printer connected to a user terminal when a document output condition is satisfied and to an apparatus and method for performing user authentication to transmit the printing information to the printer.

### [Background Art]

Recently, as the processing of tasks through a network and the Internet is widely used, in general, a system for sharing an apparatus such as a printer in order for many people to efficiently use limited resources is commonly used.

As such, when a network system is established for a plurality of user personal computers (PCs) to share one printer (for example, a network printer), a printer driver is installed in each user PC, and a port of the printer driver is set to an Internet protocol (IP) allocated to the network printer. Subsequently, when the user PC sends a document output command to the network printer, the network printer prints a document. Accordingly, since a document may be printed out by an unspecified PC that can access the IP allocated to the network printer, critical security documents may be leaked to the outside. Furthermore, a document that is output through the shared network printer may be accessed by a number of unspecified persons, thus causing information security to be vulnerable.

Some schemes to solve these problems have been proposed, for example one scheme in which a security document can be printed out only after going through a separate authentication process using a specific program that is previously installed in the user PC, and another scheme in which a user directly accesses a printer to obtain the authentication from the printer. However, these schemes have also limitations in which a printout still have vulnerable security until the printout is collected by the user after a user PC executes a document output command.

A system for security of printed paper that is disclosed in Korean Patent No. 0352905 is configured to assign a printing task corresponding to a document printing command of an application program of a client computer to a security printing unit by force and to transmit, by the security printing unit, secured printing data to a printer according to a result of user authentication.

In addition, Korean Patent No. 0544478 discloses a printing apparatus for receiving information that is requested to be printed by a person who has requested printing and a security level of the information, authorizing the request for the printing when a printing allowed level of the person is higher than the security level, and printing the requested information when a randomly generated password matches a password entered by the person.

### [Disclosure]

### [Technical Problem]

The present invention is directed to providing an apparatus and method for controlling printing using a virtual printer, and an authentication server and authentication method therefor, which may allow an authorized user to print out a document and also enhance security of the document that is printed out through the printer.

The present invention is also directed to providing a computer-readable recording medium that records a program for causing a computer to execute a method for controlling printing using a virtual printer and an authentication method of the authentication server, which may allow an authorized user to print out a document and also enhance security of the document that is printed out through the printer.

### [Technical Solution]

One aspect of the present invention provides a printing control apparatus using a virtual printer including: a virtual printing unit configured to convert and encrypt printing target data corresponding to a printing command for printing out a document into image type data and generate at least one of document information which is information on the printing target data and user information which is used to authenticate the user when the printing command is entered from a user of a user terminal in which the printing target data is stored; a user authentication unit configured to transmit at least one of the document information and the user information to an authentication server for authenticating the user between the user terminal and a separate authentication device and receive a printing request command including at least one of identification information of a printer designated by the user and authentication information indicating an authentication result of the user from the authentication server; and a printing control unit configured to receive the printing request command, decrypt the encrypted printing target data, and transmit the decrypted printing target data to the printer designated by the user, in which the authentication server performs user authentication by comparing the user information received from the user terminal with login information entered from the user who has performed access through the authentication device and transmits the printing request command to the user authentication unit when the user is determined to have printing authority.

Another aspect of the present invention provides a printing control method including: (a) when a printing command for printing out a document is entered from a user of a user terminal in which printing target data is stored, converting and encoding the printing target data corresponding to the printing command into image type data and generating at least one of document information which is information on the printing target data and user information which is used to authenticate the user; (b) transmitting at least one of the document information and the user information to an authentication server for authenticating the user between the user terminal and a separate authentication device; (c) receiving a printing request command including at least one of identification information of a printer designated by the user and authentication information indicating an authentication result of the user from the authentication server; and (d) decoding the encrypted printing target data when the printing request command is received and transmitting the decrypted printing target data to the printer designated by the user, in which the authentication server performs user authentication by comparing the user information received from the user terminal with login information received from the user who has performed access through the authentication device and transmits the decrypted printing target data to the printer designated by the user when the user is determined to have a printing authority.

Still another aspect of the present invention provides an authentication server including: a user terminal interface unit configured to communicate with a user terminal of a user, receive at least one of document information, which is information on printing target data corresponding to a printing command entered into the user terminal in which the printing target data is stored, and user information, which is used to authenticate the user, and transmit a printing request command including authentication information indicating a result of the authentication of the user to the user terminal when the user authentication through communication with a separate authentication device is completed; and an authentication device interface unit configured to communicate with the authentication device and authenticate the user by comparing the user information received from the user terminal interface unit with login information of the user received from the authentication device, in which the authentication device interface unit transmits information on one or more printers connected with the user terminal to the authentication device when the user information matches the login information received from the authentication device and receives identification information of a printer designated by the user from among the one or more printers from the authentication device.

Yet still another aspect of the present invention provides an authentication method of an authentication server, the authentication method including: (a) communicating with a user terminal of a user and receiving at least one of document information, which is information on printing target data corresponding to a printing command entered into the user terminal in which the printing target data is stored, and user information, which is used to authenticate the user from the user terminal; (b) communicating with a separate authentication device and authenticating the user by comparing the user information with login information of the user received from the authentication device; and (c) transmitting a printing request command including authentication information indicating an authentication result of the user to the user terminal when the authentication of the user is completed, in which step (b) includes transmitting information on one or more printers connected with the user terminal to the authentication device when the user information matches the login information received from the authentication device and receiving identification information of a printer designated by the user from among the one or more printers from the authentication device.

### [Advantageous Effects]

With an apparatus and method for controlling printing, and an authentication server and authentication method therefor according to the present invention, the user may enter a printing command to the user terminal and then perform user authentication through the separate authentication device at a time and position in which the document is actually desired to be printed out to collect the printed document immediately, thereby enhancing security compared to the existing printing system.

### [Description of Drawings]

FIG. 1 is a view showing an overall configuration of a printing system including a printing control apparatus using a virtual printer, and an authentication server according to the present invention.
FIG. 2 is a block diagram showing a configuration of a preferred embodiment of a printing control apparatus using a virtual printer according to the present invention.
FIG. 3 is a block diagram showing a configuration of a preferred embodiment of an authentication server according to the present invention.
FIG. 4 is a flowchart showing a process of performing a preferred embodiment of a printing control method using a virtual printer according to the present invention.
FIG. 5 is a flowchart showing a process of performing a preferred embodiment for a user authentication method performed by an authentication server according to the present invention.
FIG. 6 is a flowchart showing a process of printing out a document from a printer according to a printing command of a user in the printing system shown in FIG. 1.

### [Modes of the Invention]

Hereinafter, preferred embodiments of an apparatus and method for controlling printing using a virtual printer, and an authentication server and authentication method therefor according to the present invention will be described in detail with reference to the accompanying drawings.

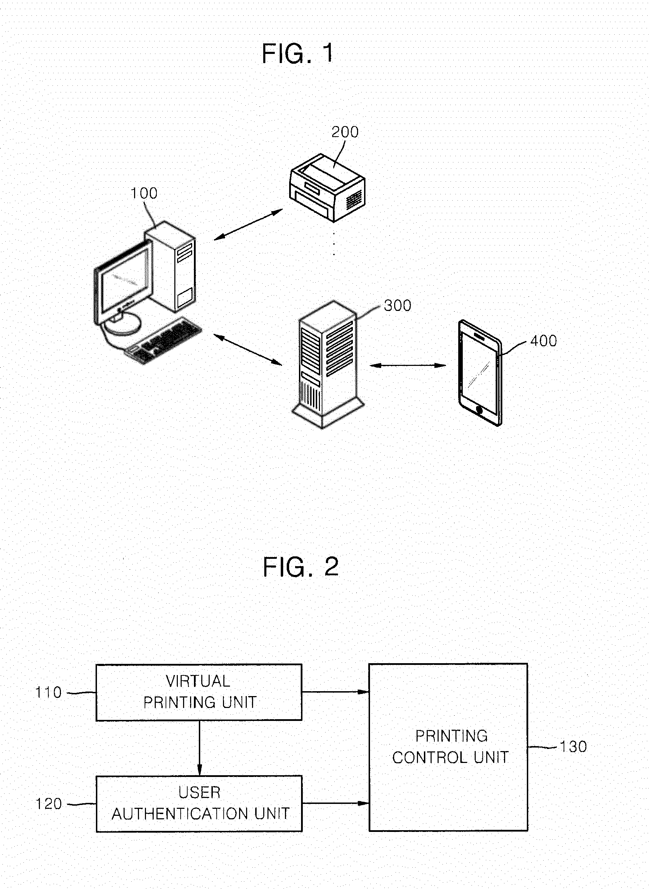

FIG. 1 is a view showing an overall configuration of a printing system including a printing control apparatus using a virtual printer, and an authentication server according to the present invention.

Referring to FIG. 1, a printing control apparatus according to the present invention is implemented in a user terminal 100, such as a personal computer (PC), to execute a printing command that is entered from a user. The user terminal 100 is connected with one or more printers 200, which may include a local printer or a network printer. The printing control apparatus according to the present invention allows the printer to perform printing by sending data to be printed (hereinafter also referred to as printing target data) to a printer 200 that is designated by a user from among the one or more printers 200 connected with the user terminal 100 at a time at which the user desires the printing target data. In particular, the printing control apparatus according to the present invention is intended to enhance security, and thus may be used in a company environment in which a plurality of users uses a shared printer.

In addition, the printing control apparatus according to the present invention transmits and/or receives authentication data including information associated with authentication of the user to and/or from the authentication server 300 that performs authentication on the user. The authentication server 300 according to the present invention authenticates a user who has performed access through a separate authentication device 400 other than the user terminal 100, such as a mobile terminal, and transmits a result of the authentication to the printing control apparatus according to the present invention, that is, the user terminal 100. Upon receiving a result of the authentication from the authentication server 300, the printing control apparatus transmits printing target data corresponding to the result to the printer 200 to allow the printer 200 to print the data as a document.

That is, in a printing system to which the present invention is applied, the user enters a printing command through the user terminal 100 in which the printing target data is stored, and user authentication is performed using the separated authentication device 400 in order to output the printing target data corresponding to the printing command. The authentication server 300 authenticates the user when user information received from the user terminal 100 matches login information received from the authentication device 400 and transmits a printing request command to the user terminal 100.

In this case, one reason the authentication server 300 authenticates the user who has perform access through the separate authentication device 400 other than the user terminal 100 is that a security document may be leaked until the user picks up the document printed out from the printer 200 after the user enters a printing command into the user terminal if the user terminal 100 and the printer 200 are positioned far from each other, in a case in which the printing target data is transmitted to the printer 200 immediately when the printing command is entered into the user terminal 100 and thus the printer 200 performs a print-out task. Another reason is that the user may be allowed to obtain a printout from a desired printer 200 among the one or more printers 200 at a desired printing time.

According to the present invention, although the user enters an printing command into the user terminal 100, if printing target data corresponding to the printing command is transmitted to the printer 200 after an authentication process using the separate authentication device 400 is completed at a time at which the user actually desires the printing target data, the user may collect the document immediately when the document is printed out. Accordingly, only an authenticated and authorized user can print the document and also security of the document may be enhanced.

In this case, in order to achieve an object of enhancement of document security by performing user authentication at a time at which the user desires the document to be printed out, a mobile terminal such as a smartphone, or a PC that is positioned near the printer 200 designated by the user may be used as the authentication device 400. The present invention is not limited thereto.

A process that is performed by the printing control apparatus and the authentication server 300 according to the present invention until the document is printed out through the printer 200 after the user enters a printing command will be described in detail below.

FIG. 2 is a block diagram showing a configuration of a preferred embodiment of a printing control apparatus using a virtual printer according to the present invention.

Referring to FIG. 2, a printing control apparatus according to the present invention includes a virtual printing unit 110, a user authentication unit 120, and a printing control unit 130.

Upon receiving a printing command for printing out a document from a user of the user terminal 100, the virtual printing unit 110 encrypts printing target data corresponding to a print command and generates at least one of document information which is information on the printing target data and user information which is used for user authentication.

The virtual printing unit 110 is implemented in the form of a virtual printing module installed in the user terminal 100, and the user enables the printing command to be delivered to the virtual printing unit 110 rather than to be directly delivered to the printer 200, by selecting the virtual printing module as a printer to be used for the printing when entering the printing command through the user terminal 100. When the printing command entered by the user is delivered, the virtual printing unit 110 converts printing target data corresponding to the entered printing command among pieces of data stored in the user terminal 100 into image type data and encrypts the generated image.

The virtual printing unit 110 generates at least one of document information which is information on the printing target data and user information which is used for user authentication while converting and encoding the printing target data into the image. The document information may include at least one of a name of the printing target data, a time at which the printing target data is generated or stored in the user terminal 100, and the number of papers to be printed, which is set by the user, and the user information which is information for authenticating a user and may include at least one of an identity (ID), a password (PW), a mail address of the user, and position information (a division and a rank) if the user belongs to a company.

The virtual printing unit 110 transmits at least one of the document information and the user information to the user authentication unit 120 and transmits the printing target data having the form of an encrypted image to the printing control unit 130.

The user authentication unit 120 transmits at least one of the document information and the user information to the authentication server 300 that authenticates the user between the authentication device 400 of the user and the user terminal 100 and receives a printing request command including at least one of identification information of the printer 200 that is designated by the user and authentication information indicating a result of the user authentication from the authentication server 300 when the user authentication is completed by the authentication server 300. The printing request command denotes a command for printing out the printing target data as a document from the printer 200. When the authentication server 300 fails the user authentication through communication with the authentication device 400, the user authentication unit 120 receives authentication failure data.

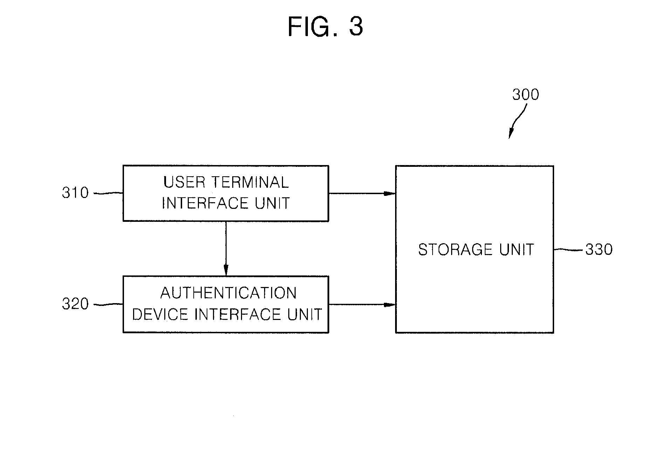

FIG. 3 is a block diagram showing a configuration of a preferred embodiment of an authentication server 300 according to the present invention.

Referring to FIG. 3, the authentication server 300 according to the present invention includes a user terminal interface unit 310, an authentication device interface unit 320, and a storage unit 330.

The user terminal interface unit 310 communicates with the user authentication unit 120 of the printing control apparatus according to the present invention, and the authentication device interface unit 320 communicates with the authentication device 400 of the user. In addition, document information and user information that are received from the user authentication unit 120, identification information of the printer 200 designated by the user, which is information received from the authentication device 400, identification information of the printing target data selected by the user, and authentication information indicating an authentication result of the user are stored in the storage unit 330. In addition, identification information of the printer 200 that is connected with the user terminal 100 may be stored, thus allowing the user to designate a printer through the authentication device 400.

The user terminal interface unit 310 receives at least one of the document information and the user information from the user authentication unit 120 of the printing control apparatus according to the present invention and stores the received information in the storage unit 330.

Subsequently, when the user accesses the authentication server 300 using the authentication device 400 and then enters login information for user authentication, such as an identity (ID) and a password (PW), the authentication device interface unit 320 compares the login information (the identity (ID) and the password (PW) received from the authentication device 400 with the user information stored in the storage unit 330. When a result of the comparison is that the login information matches the user information, the authentication device interface unit 320 transmits, to the authentication device 400, a message informing that the user authentication has been completed. In contrast, when the entered login information does not match the stored user information, the authentication device interface unit 320 generates and delivers a message informing that the user authentication has failed to the user terminal interface unit 310, and the user terminal interface unit 310 transmits authentication failure data to the user terminal 100, that is, the user authentication unit 120 of the printing control apparatus according to the present invention.

When the authentication device 400 is a mobile terminal, the user authentication may be performed by accessing a mobile version of a user authentication website or by using a program or application for the user authentication. When the authentication device 400 is a PC, the user authentication may be performed by accessing the user authentication website.

After the user authentication is completed, the authentication device interface unit 320 may transmits, to the authentication device 400, a printing list of the authenticated user, that is, the user of the user terminal 100 and the authentication device 400. The printing list is generated based on one or more pieces of document information that are transmitted from the user authentication unit 120 of the printing control apparatus according to the present invention to the authentication device 400, and is intended for the user to select a document to be currently printed out through the printer 200.

When there are one or more pieces of the printing target data corresponding to the printing command the user enters into the user terminal 100, the virtual printing unit 110 generates one or more pieces of document information corresponding to the printing target data. The generated one or more pieces of document information are transmitted to the authentication server 300 and stored in the storage unit 330, and the authentication device interface unit 320 generates a printing list from the one or more pieces of document information to transmit the printing list to the authentication device 400 when the user authentication through the authentication device 400 is completed. Preferably, the printing list is composed of identification information of the printing target data included in the document information, for example, a name of the printing target data. However, the present invention is not limited thereto as long as the identification information is data for identifying the printing target data. The printing list may be output through a screen of the authentication device 400 and may enable the user to select the desired printing target data.

In addition, the authentication device interface unit 320 may transmit the identification information of the one or more printers 200 that are connected with the user terminal 100 to the authentication device 400 and allow the user to designate, through the authentication device 400, the printer 200 from which the user desires the document to be printed out. The identification information of the printer 200 may be, but not limited thereto, a port number to which the printer 200 is connected or an IP address of the printer 200. Accordingly, when the authentication device 400 is a mobile terminal, a user of the mobile terminal may perform the user authentication through the authentication device 400 at a time at which the document is desired to be printed out and may designate a printer 200 from which the document is desired to be printed out, thus collecting the document immediately when the document is printed out from the desired printer 200. In addition, when the authentication device 400 is a PC, the user may designate a printer 200 that is positioned near the PC and enable the document to be printed out from the printer 200.

At least one of the identification information of the printing target data selected by the user through the authentication device 400 and identification information of the printer 200 designated by the user is transmitted to the authentication device interface unit 320 of the authentication server 300, and the authentication device interface unit 320 delivers a printing request command including at least one of the identification of the selected printing target data, the identification information of the designated printer 200, and the authentication information of the user to the user terminal interface unit 310. In addition, as described above, the information included in the printing request command is stored in the storage unit 330.

Last, the user terminal interface unit 310 transmits the delivered printing request command to the user authentication unit 120 of the printing control apparatus according to the present invention.

When the printing request command is received by the user authentication unit 120 from the authentication server 300, the printing control unit 140 of the printing control apparatus according to the present invention decrypts and transmits the encrypted printing target data to the designated printer 200. Upon receiving the printing target data, the printer 200 prints out the document. In this case, preferably, the printing target data is presented in the form of an image, but is not limited thereto.

In addition, the printing control unit 140 may determine whether a user corresponding to the printing request command received from the authentication server 300 has printing authority with reference to a printing policy that is previously stored, and transmit the decrypted printing target data to the designated printer 200 only when the user is determined to have the printing authority. The printing policy may be stored in the user terminal 100, and transmitted periodically or passively from the authentication server 300 and updated.

As described above, according to the printing control apparatus and the authentication server 300 according to the present invention, the user may enter a printing command to the user terminal 100 and then perform user authentication through the authentication device 400 at a time and position in which the user actually desires the document to be printed out to collect the printed document immediately, thereby enhancing security compared to the existing printing system. Furthermore, the user does not use a fixed printer and may select a printer 200 from which the document is desired to be printed out depending to a location of the user, thereby increasing the convenience of the user.

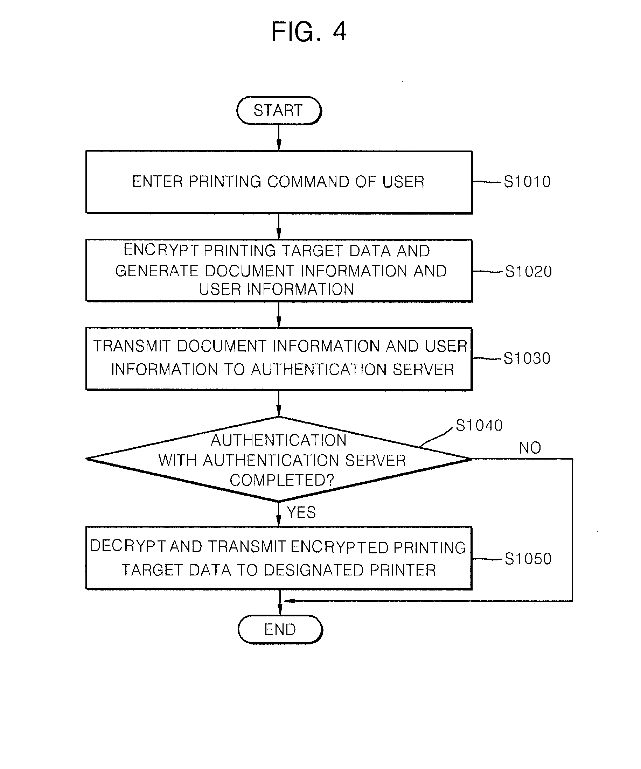

FIG. 4 is a flowchart showing a process of performing a preferred embodiment of a printing control method using a virtual printer according to the present invention.

Referring to FIG. 4, when a printing command is received from a user of the user terminal 100 (S1010), the virtual printing unit 110 encrypts printing target data corresponding to the printing command and generates at least one of document information and user information (S1020). In this case, the printing target data may be generated as an image and then encrypted. Next, the user authentication unit 120 transmits at least one of the document information and the user information to the authentication server 300 (S1030).

Subsequently, when user authentication is completed by the authentication server 300 through communication between the authentication server 300 and the authentication device 400 of the user and a printing request command is received from the authentication server 300 (S1040), the printing control unit 130 decrypts and transmits the encrypted printing target data to a printer that is designated by the user (S1050), thus allowing the printing target data to be printed out from the printer 200 as an actual document.

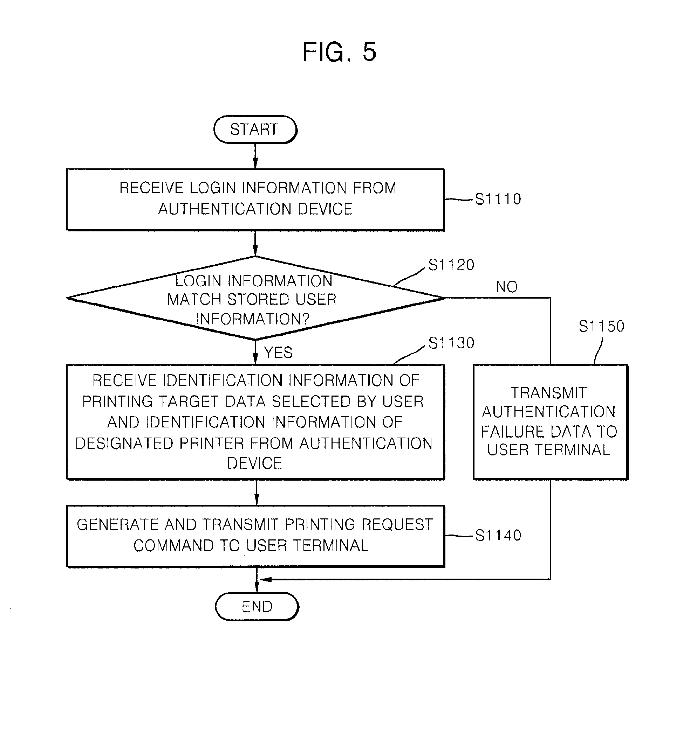

FIG. 5 is a flowchart showing a process of performing a preferred embodiment for a user authentication method performed by an authentication server 300 according to the present invention.

Referring to FIG. 5, the authentication device interface unit 320 receives login information of a user, for example, an identity (ID) and a password (PW), from the authentication device 400 (S1110), and determines whether the received login information matches user information stored in the storage unit 330 (S 1120).

When the received login information matches the stored user information, the authentication device interface unit 320 provides at least one of a printing list generated from one or more pieces of document information and identification information of the printer 200 connected to the user terminal 100 to allow the user to select printing target data to be printed out as a document and designate the printer 200 (S1130). However, this process may be omitted as necessary.

When the user authentication fails, the user terminal interface unit 310 transmits authentication failure data to at least one of the user terminal 100 or the authentication device 400 (S1150), thereby canceling the next printing process.

Upon receiving at least one of identification information of the printing target data selected by the user and identification information of the printer 200 designated by the user from the authentication device interface unit 320, the user terminal interface unit 310 transmits a printing request command including the information to the user terminal 100 (S 1140), thus allowing the document to be printed out from the designated printer 200.

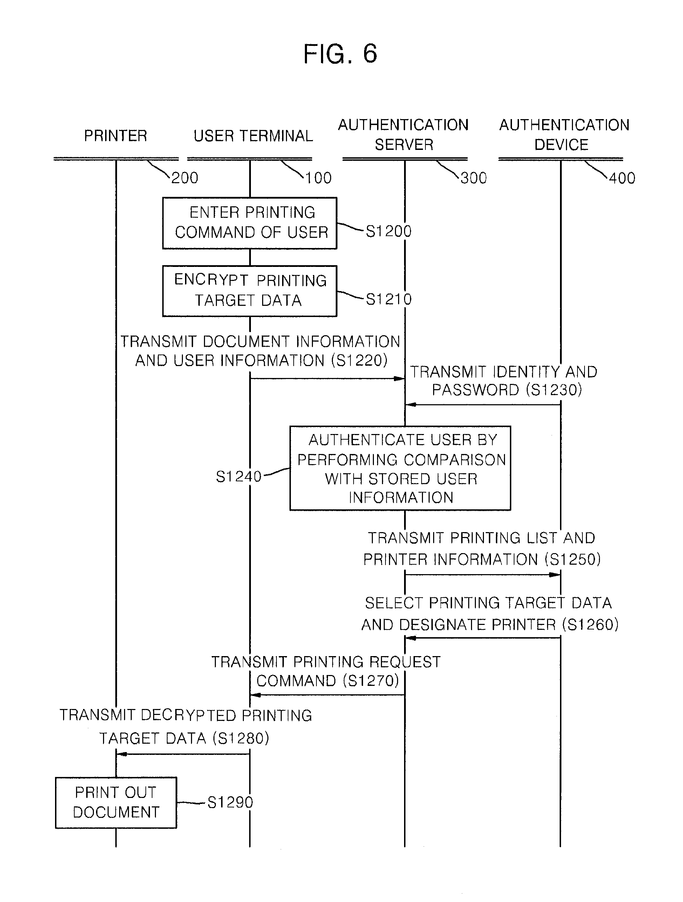

FIG. 6 is a flowchart showing a process of printing out a document from a printer 200 according to a printing command of a user in the printing system shown in FIG. 1.

Referring to FIG. 6, when a printing command is received from the user through the user terminal 100 (S1200), the virtual printing unit 110 of the printing control apparatus according to the present invention that is implemented in the user terminal 100 generates printing target data as an image and then encrypt the printing target data (S1210), and the user authentication unit 120 transmits at least one of document information and user information generated by the virtual printing unit 110 to the authentication server 300 (S1220).

The authentication device interface unit 320 of the authentication server 300 receives login information of the user, for example, an identity (ID) and a password (PW), from the authentication device 400 (S1230), and performs user authentication by comparing the login information with stored user information (S1240). In addition, the authentication device interface unit 320 provides at least one of a printing list and information on the printer 200 to the authentication device 400 when the user authentication is completed (S1250), thus allowing the user to select printing target data through the authentication device 400 and designate the printer 200 (S1260).

When the above process is completed, the user terminal interface unit 310 transmits a printing request command to the user terminal 100 (S1270), and the printing control unit 130 of the printing control device according to the present invention transmits the decrypted printing target data to the designated printer 200 (S1280). The printer 200 prints out the received printing target data as a document (S1290).

The invention can also be embodied as computer-readable codes on a computer-readable recording medium. The computer-readable recording medium is any kind of recording medium for storing data that may be read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer readable code is stored and executed in a distributed fashion.

While the present invention has been particularly shown and described with reference to preferred embodiments thereof, it should not be construed as being limited to the embodiments set forth herein. It will be understood by those skilled in the art that various changes in form and details may be made to the described embodiments without departing from the spirit and scope of the present invention as defined by the following claims.

## Claims

1. A printing control apparatus comprising:
a virtual printing unit configured to convert and encrypt printing target data corresponding to a printing command for printing out a document into image type data and generate at least one of document information which is information on the printing target data and user information which is used to authenticate the user when the printing command is entered from a user of a user terminal in which the printing target data is stored;
a user authentication unit configured to transmit at least one of the document information and the user information to an authentication server for authenticating the user between the user terminal and a separate authentication device and receive a printing request command including at least one of identification information of a printer designated by the user and authentication information indicating an authentication result of the user from the authentication server; and
a printing control unit configured to receive the printing request command, decrypt the encrypted printing target data, and transmit the decrypted printing target data to the printer designated by the user,
wherein the authentication server performs user authentication by comparing the user information received from the user terminal with login information received from the user who has performed access through the authentication device and transmits the printing request command to the user authentication unit when the user is determined to have printing authority.

2. The printing control apparatus of claim 1, wherein the document information includes at least one of a name of the printing target data, a time at which the printing target data is stored in the user terminal, and the number of papers to be printed, which is set by the user, and the user information includes at least one of an identity, a password, a name, an e-mail, a division, and a rank of the user.

3. The printing control apparatus of claim 1 or 2, wherein the virtual printing unit is a virtual printer that is selected by the printing command in the user terminal.

4. An authentication server comprising:
a user terminal interface unit configured to communicate with a user terminal of a user, receive at least one of document information, which is information on printing target data corresponding to a printing command entered into the user terminal in which the printing target data is stored, and user information, which is used to authenticate the use, and transmit a printing request command including authentication information indicating a result of the authentication of the user to the user terminal when the user authentication through communication with a separate authentication device is completed; and
an authentication device interface unit configured to communicate with the authentication device and authenticate the user by comparing the user information received from the user terminal interface unit with login information of the user received from the authentication device,
wherein the authentication device interface unit transmits information on one or more printers connected with the user terminal to the authentication device when the user information matches the login information received from the authentication device and receives identification information of a printer designated by the user from among the one or more printers from the authentication device.

5. The authentication server of claim 4,
wherein the user terminal interface unit receives one or more pieces of document information corresponding to one or more pieces of printing target data from the user terminal, and
wherein the authentication device interface unit transmits a printing list generated based on the one or more pieces of document information to the authentication device and receives identification information of the printing target data selected by the user from the authentication device.

6. A printing control method comprising:
(a) when a printing command for printing out a document is entered from a user of a user terminal in which printing target data is stored, converting and encoding the printing target data corresponding to the printing command into image type data and generating at least one of document information which is information on the printing target data and user information which is used to authenticate the user;
(b) transmitting at least one of the document information and the user information to an authentication server for authenticating the user between the user terminal and a separate authentication device;
(c) receiving a printing request command including at least one of identification information of a printer designated by the user and authentication information indicating an authentication result of the user from the authentication server; and
(d) decoding the encrypted printing target data when the printing request command is received and transmitting the decrypted printing target data to the printer designated by the user,
wherein the authentication server performs user authentication by comparing the user information received from the user terminal with login information received from the user who has performed access through the authentication device and transmits the decrypted printing target data to the printer designated by the user when the user is determined to have a printing authority.

7. The printing control method of claim 6, wherein the document information includes at least one of a name of the printing target data, a time when the printing target data is stored in the user terminal, and the number of papers to be printed, which is set by the user, and the user information includes at least one of an identity, a password, a name, an e-mail, a division, and a rank of the user.

8. An authentication method of an authentication server, the authentication method comprising:
(a) communicating with a user terminal of a user and receiving at least one of document information, which is information on printing target data corresponding to a printing command entered into the user terminal in which the printing target data is stored, and user information, which is used to authenticate the user from the user terminal;
(b) communicating with a separate authentication device and authenticating the user by comparing the user information with login information of the user received from the authentication device; and
(c) transmitting a printing request command including authentication information indicating an authentication result of the user to the user terminal when the authentication of the user is completed,
wherein step (b) comprises transmitting information on one or more printers connected with the user terminal to the authentication device when the user information matches the login information received from the authentication device and receiving identification information of a printer designated by the user from among the one or more printers from the authentication device.

9. The authentication method of claim 8,
wherein step (a) comprises receiving one or more pieces of document information corresponding to one or more pieces of printing target data from the user terminal, and
wherein step (b) comprises transmitting a printing list generated based on the one or more pieces of document information to the authentication device and receiving identification information of the printing target data selected by the user from the authentication device.

10. A computer-readable recording medium recording a program for causing a computer to execute the printing control method of claim 6 or 7.

11. A computer-readable recording medium recording a program for causing a computer to execute the authentication method of the authentication server of claim 8 or 9.
